# Europäisches Patentamt
# European Patent Office
# Office européen des brevets

(19)

(11) Veröffentlichungsnummer: **0 212 172**
**B1**

(12) **EUROPÄISCHE PATENTSCHRIFT**

(45) Veröffentlichungstag der Patentschrift: **16.05.90**

(51) Int. Cl.⁵: **H 02 J 3/36, H 02 M 7/757**

(21) Anmeldenummer: **86109049.6**

(22) Anmeldetag: **03.07.86**

(54) Verfahren und Kompensationseinrichtung zur Kompensation von Stromschwingungen.

(30) Priorität: **16.08.85 CH 3547/85**

(43) Veröffentlichungstag der Anmeldung:
**04.03.87 Patentblatt 87/10**

(45) Bekanntmachung des Hinweises auf die
Patenterteilung:
**16.05.90 Patentblatt 90/20**

(84) Benannte Vertragsstaaten:
**CH DE IT LI SE**

(56) Entgegenhaltungen:
**EP-A-17 452 0**
**GB-A-2 008 868**
**US-A-3 659 186**

(73) Patentinhaber: **BBC Brown Boveri AG**
**Haselstrasse**
**CH-5401 Baden (CH)**

(72) Erfinder: **Dähler, Peter**
**Unterer Leeweg**
**CH-5236 Remigen (CH)**
Erfinder: **Neidhart, Peter**
**Dorfstrasse 73**
**CH-5417 Untersiggenthal (CH)**
Erfinder: **Sadek, Kadry, Dr.**
**Silcherweg 5**
**D-7891 Lauchringen (DE)**
Erfinder: **Stemmler, Herbert, Dr.**
**Ahornweg 16**
**CH-5416 Kirchdorf (CH)**

Courier Press, Leamington Spa, England.

**Beschreibung**

Bei der Erfindung wird ausgegangen von einem Verfahren zur Kompensation von Stromschwingungen in einem Gleichstromzwischenkreis zwischen mindestens einem ersten und zweiten Stromrichter nach dem Oberbegriff des Patentanspruchs 1. Die Erfindung betrifft auch eine Kompensationseinrichtung zur Durchführung des Verfahrens.

Mit dem Oberbegriff nimmt die Erfindung auf einen Stand der Technik Bezug, wie er in der prioritätsälteren und bezüglich der Staaten Bundesrepublik Deutschland und Schweden als Stand der Technik geltenden EP—A1—0 174 520 beschrieben ist. Dort werden zum Unterdrücken bzw. Dämpfen von Resonanzerscheinungen in der wechselrichterseitigen Wechselspannung einer Hochspannungsgleichstromübertragungsstrecke die Zwischenkreisgleichspannung und der Zwischenkreisstrom detektiert. Daraus wird unter Amplitudenverstärkung und Phasendrehung um etwa 90° die Resonanzschwingungskomponente mittels Bandpassfilterung ausgefiltert und als Vorsteuergrösse zur Steuerspannung des Gleichrichters der HGÜ-Anlage verwendet.

Zum einschlägigen Stand der Technik wird ferner auf die DE—C2—2 749 360 verwiesen. Dort kommt zur Kompensation von unerwünschten Oberschwingungsströmen bei Hochspannungs-Gleichstrom-Übertragungsanlagen, kurz HGUe-Anlagen, ein Hochpassbreitbandfilter in Verbindung mit einem besonderen Oberwellenstromrichter zur Anwendung. Eine derartige Kompensationseinrichtung ist relativ aufwendig hinsichtlich ihrer Bauelemente. Ein nachträglicher Einbau in bestehende HGUe-Anlagen erfordert aufwenige Umrüstungen.

Die Erfindung, wie sie in den Patentansprüchen 1 und 6 definiert ist, löst die Aufgabe, ein Verfahren und eine Kompensationseinrichtung zur Kompensation von Stromschwingungen in einem Gleichstromzwischenkreis zwischen mindestens einem ersten und zweiten Stromrichter anzugeben, mit denen unerwünschte Stromschwingungen in einem Gleichstromzwischenkreis mit geringerem Aufwand reduziert werden können.

Ein Vorteil der Erfindung besteht darin, dass zur Kompensation der unerwünschten Stromschwingungen kein zusätzlicher Oberwellenstromrichter und kein zusätzliches Hochpassbreitbandfilter erforderlich sind. Die ohnedies vorhandenen Stromrichter—Gleichrichter und Wechselrichter——können zur Kompensation verwendet werden.

Im einfachsten Fall, wenn speicherprogrammierte Steuereinrichtungen für die Stromrichter verwendet werden, genügt eine Aenderung des Steuerprogramms, um eine wirksame Kompensation der Stromschwingungen zu erreichen. Das Steuerprogramm lässt sich leicht austauschen, so dass eine schnelle und einfache Umrüstung bestehender Anlagen möglich ist. Die Kompensation ist nicht auf die Netzfrequenz und/oder deren Oberschwingungen beschränkt; es lassen sich vielmehr Stromschwingungen nehezu beliebiger Frequenz kompensieren. Die Anwendung ist auch nicht auf HGUe-Anlagen beschränkt. Die Erfindung lässt sich überall dort anwenden, wo Stromrichter mit einem Gleichstromzwischenkreis zur Anwendung kommen, vorzugsweise zur Speisung von Drehstrommaschinen.

Die Erfindung wird nachstehend anhand eines Ausführungsbeispiels erläutert. Es zeigen:

Fig. 1 eine Kompensationseinrichtung mit zwei Stromrichtern, die einerseits über einen Gleichstromzwischenkreis miteinander verbunden sind und die andererseits mit zwei Drehstromnetzen in Wirkverbindung stehen und

Fig. 2—6 Signaldiagramme zur Erläuterung der Wirkungsweise der Kompensationseinrichtung gemäss Fig. 1, wobei jeweils der Signalstrom i in Abhängigkeit von der Zeit t aufgetragen ist.

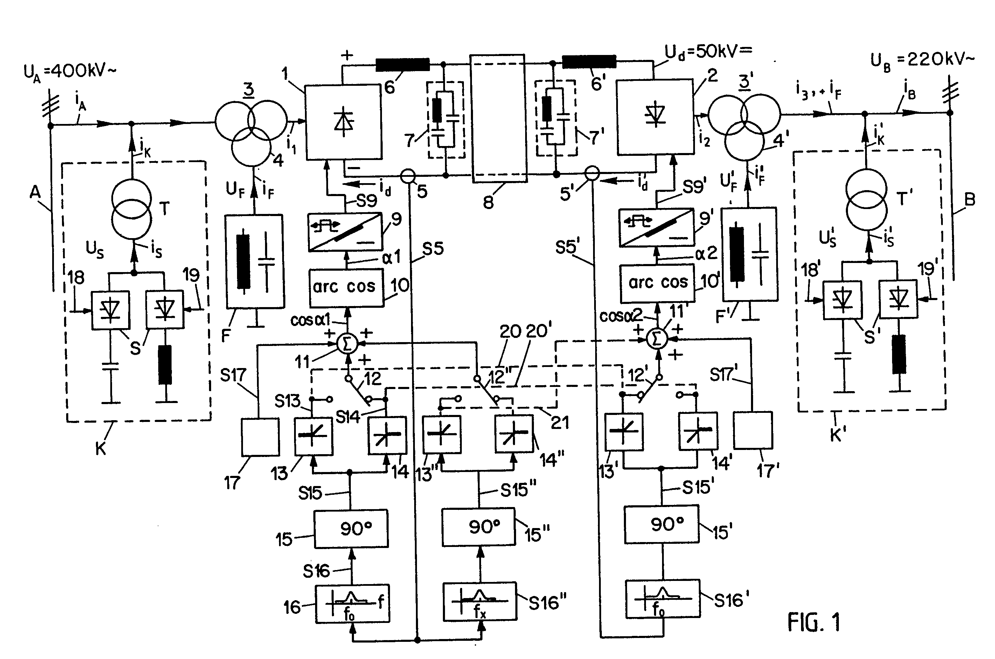

In Fig. 1 ist mit 1 ein erster Stromrichter bzw. Zwischenkreis-Gleichrichter bezeichnet, der gleichstromseitig über Glättungsdrosseln 6 und 6' eines Gleichstromzwischenkreises und über eine Gleichspannungsübertragungsleitung 8 mit den Gleichstromanschlüssen eines zweiten Stromrichters bzw. Zwischenkreis-Wechselrichters 2 verbunden ist. Die Gleichspannungsübertragungsleitung 8 kann im Falle einer HGUe-Anlage eine HGUe-Kurzkupplung oder eine HGUe-Fernübertragung repräsentieren, wobei der erste und zweite Stromrichter an ggf. mehrere 100 km voneinander entfernten Orten aufgestellt sind. An jedem Aufstellungsort ist ein Gleichspannungsfilter 7 bzw. 7' zwischen einer "+"-Uebertragungsleitung und einer "—"-Uebertragungsleitung des Gleichspannungszwischenkreises angeschlossen, das auf charakteristische Stromrichterschwingungen m · p abgestimmt ist, p=Pulszahl der Stromrichter 1 bzw. 2, m=1, 2 . . . ganzzahlig. Ueblicherweise werden 12 pulsige Stromrichter verwendet mit p=12.

Der Gleichstromzwischenkreis weist eine Zwischenkreis-Gleichspannung $U_d$=50 kV auf. Am Ort des Gleichrichters 1 ist ein Stromschwingungsdetektor bzw. Stromwandler bzw. Stromdetektor 5 vorgesehen, der einen Gleichstrom $i_d$ detektiert und ausgangsseitig ein Gleichstromzwischenkreis-Stromsignal S5 liefert. Am Ort des Wechselrichters 2 ist ein Stromdetektor 5' vorgesehen, der einen Gleichstrom $i_d'$ detektiert und ausgangsseitig ein Gleichstromzwischenkreis-Stromsignal S5' liefert.

Der Gleichrichter 1 ist wechselstromseitig über einen Stromrichtertransformator 3 mit einem dreiphasigen Drehstromnetz A mit einer Wechselspannung von $U_A$=400 kV verbunden. An das Drehstromnetz A ist ein Blindstromkompensator K angeschlossen, der eingangsseitig einen Transformator T aufweist. Der Transformator T ist über eine Schalteinrichtung S einerseits mit einem einseitig geerdeten Kondensator und andererseits mit einer einseitig geerdeten Drossel verbunden. Schalterspannung und Schalterstrom sind mit $U_S$ bzw. $i_S$ bezeichnet, $i_K$ bezeichnet den Wechselstrom des Blindstromkompensators K. Die Schalteinrichtung S weist ein durch ein Zündsignal 18 steuerbares erstes Ventil für den Anschluss des Kondensators und ein durch ein Zündsignal 19 steuerbares zweites Ventil für den Anschluss der Drossel auf.

Der Stromrichtertransformator 3 weist eine Tertiärwicklung 4 auf, an die ein einseitig geerdetes harmonisches Filter F angeschlossen ist, das auf charakteristische Harmonische $m \cdot p \pm 1$ des Gleichrichters 1 abgestimmt ist. $U_F$ bezeichnet die Wechselspannung des Filters F und $i_F$ dessen Wechselstrom, $i_1$ bezeichnet den Wechselstrom an Wechselstromeingang des Gleichrichters 1.

Der Wechselrichter 2 ist wechselstromseitig über einen Stromrichtertransformator 3' mit einem dreiphasigen Drehstromnetz B mit einer Wechselspannung von $U_B = 220$ kV verbunden. An das Drehstromnetz B ist ein Blindstromkompensator K' angeschlossen, der gleich aufgebaut ist wie der Blindstromkompensator K. Das gleiche gilt für ein an eine Tertiärwicklung 4' des Stromrichtertransformators 3' angeschlossenes harmonisches Filter F'. Gleiche Teile sind entsprechend bezeichnet und zusätzlich mit einem Apostroph versehen.

Zur Steuerung der Zwischenkreis-Stromrichter 1 und 2 sind handelsübliche Gleichspannungs/ Pulsphasen-Umsetzer mit galvanischer Trennung bzw. Zündimpulsbildner 9 bzw. 9' vorgesehen, die ausgangsseitig Zündsignale S9 bzw. S9' an Steuereingänge der Zwischenkreis-Stromrichter 1 und 2 liefern. Die Zündimpulsbildner 9 und 9' erhalten ihre Zündwinkel-Vorgaben α1 bzw. α2 über arccos-Funktionsgeber 10 bzw. 10' von handelsüblichen Summiergliedern 11 bzw. 11', welche ausgangsseitig Signale liefern, die zu cos α1 bzw. cos α2 proportional sind. Die Summierglieder 11 bzw. 11' sind über "+"-Signaleingänge einerseits mit an sich bekannten Zündsignalsteuereinrichtungen 17 bzw. 17' verbunden, die ausgangsseitig Zündsteuersignale S17 bzw. S17' liefern, und andererseits mit einem gemeinsamen Ausgang von elektronischen Schaltern 12 bzw. 12'. Jeder Schalter 12 bzw. 12' weist zwei Eingänge auf.

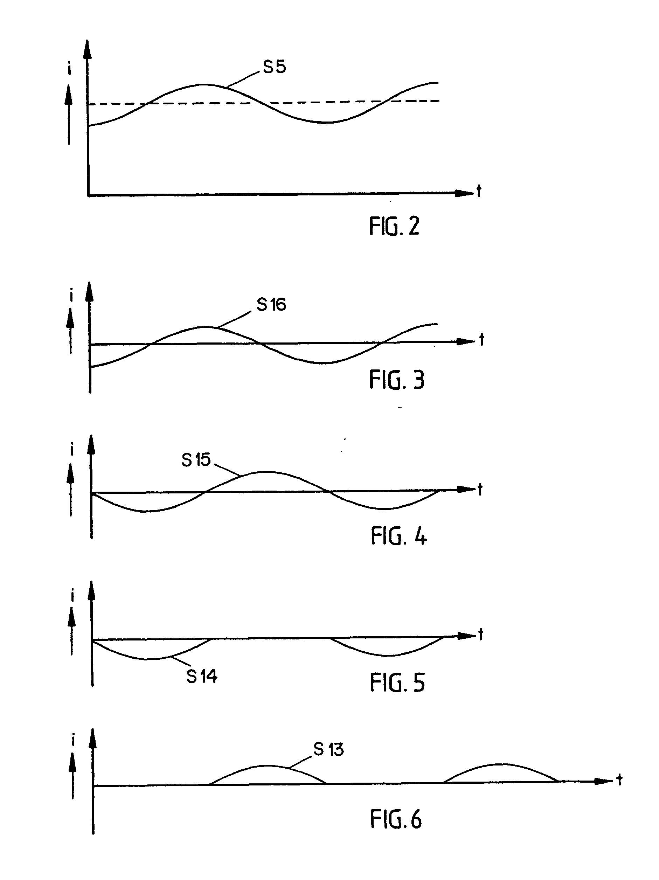

Ein erster bzw. Wechselrichtereingang ist mit dem Ausgang eines ersten Funktionsbildners 13 bzw. 13' für Wechselrichterbetrieb verbunden, an welchen ausgangsseitig nur die positive Komponente S13, vgl. Fig. 6, bzw. S13' eines Kompensationssignals S15, vgl. Fig. 2, bzw. S15' anliegt. Als erster Funktionsbildner 13 bzw. 13' wird vorzugsweise eine Diode verwendet.

Ein zweiter bzw. Gleichrichtereingang ist mit dem Ausgang eines zweiten Funktionsbildners 14 bzw. 14' für Gleichrichterbetrieb verbunden, an welchem ausgangsseitig die negative Komponente S14, vgl. Fig. 5, bzw. S14' des Kompensationssignals S15 bzw. S15' anliegt. Als zweiter Funktionsbildner 14 bzw. 14' wird vorzugsweise eine Diode verwendet.

Die von den Stromdetektoren 5 bzw. 5' gewonnenen Gleichstromzwischenkreis-Stromsignale S5 bzw. S5' werden Bandpassfiltern 16 bzw. 16' zugeführt, welche auf die im Gleichstromzwischenkreis unerwünschte und daher auszufilternde Frequenz $f_o$ von 50 Hz der beiden Drehstromnetze A, B abgestimmt sind.

Die Bandpassfilter 16 bzw. 16' liefern ausgangsseitig Bandpassfilter-Ausgangssignale S16, vgl. Fig. 3, bzw. S16', die nur noch den Wechselspannungsanteil der Gleichstromzwischenkreis-Stromsignale S5 bzw. S5' enthalten. Die Bandpassfilter-Ausgangssignale S16 bzw. S16' werden π/2- oder 90°-Phasendrehgliedern zugeführt mit 90° nacheilender Phasenverschiebung, die ausgangsseitig die Kompensationssignale S15 bzw. S15' liefern, welche Kompensationswinkeln Δ cos α1 bzw. Δ cos α2 zugeordnet sind.

Für den Fall, dass Zwischenkreis-Gleichrichter 1 und Zwischenkreis-Wechselrichter 2 am selben Ort und in geringer Distanz zueinander untergebracht sind, können die Glättungsdrossel 6', das Gleichspannungsfilter 7', der Stromdetektor 5', das Bandpassfilter 16', das 90°-Phasendrehglied 15' sowie die Funktionsbildner 13' und 14' entfallen. Dafür ist dann der Signalausgang des ersten Funktionsbildners 13 über die gestrichelt eingezeichnete Verbindungsleitung 20 mit dem Wechselrichtereingang des Schalters 12' verbunden, während der Signalausgang des zweiten Funktionsbildners 14 über die gestrichelt eingezeichnete Verbindungsleitung 20' mit dem Gleichrichtereingang des Schalters 12' verbunden ist.

Die eingezeichnete Schalterposition des Schalters 12 gilt für den Betrieb des ersten Stromrichters 1 als Gleichrichter. Falls der erste Stromrichter 1 als Wechselrichter betrieben werden soll, ist der Schalter 12 umzuschalten. Die eingezeichnete Schaltposition des Schalters 12' gilt für den Betrieb des zweiten Stromrichters 2 als Wechselrichter. Falls der zweite Stromrichter 2 als Gleichrichter betrieben werden soll, ist der Schalter 12' umzuschalten. Falls eine Betriebsumschaltung der beiden Stromrichter 1 und 2 für deren vorgesehenen Einsatz nicht in Betracht kommt, können die Schalter 12 und 12' entfallen und die in Fig. 1 dargestellten Schaltpositionen durch Verbindungsleitungen realisiert werden.

Für den Fall, dass ausser der Netzfrequenz $f_o$ von 50 Hz zusätzlich eine davon abweichende, vorgebbare Frequenz $f_x$ auszufiltern bzw. die zugehörige Stromschwingung zu kompensieren ist, sind ein zusätzliches, auf $f_x$ abgestimmtes Bandpassfilter 16'' mit nachgeordnetem 90°-Phasendrehglied 15'' nacheilend, diesem nachgeordneten Funktionsbildnern 13'' und 14'' mit nachgeordnetem Schalter 12'' vorgesehen, wobei der Ausgang des Schalters 12'' mit einem zusätzlichen "+"-Signaleingang des Summiergliedes 11 verbunden ist. Funktionsweise und Schaltungsanordnung entsprechen denjenigen, wie sie im Zusammenhang mit der Frequenz $f_o$ oben beschrieben wurden. Falls beide Stromrichter 1 und 2 räumlich weit voneinander getrennt sind, so wären an beiden Orten derartige Kompensationseinrichtungen für $f_x$ vorzusehen (nicht dargestellt). Falls für beide Stromrichter 1 und 2 eine Betriebsart-Umschaltung nicht in Betracht kommt, so wäre der Ausgang des ersten Funktionsbildners 13'' über eine gestrichelt dargestellte Verbindungsleitung 21 mit einem zusätzlichen "+"-Signaleingang des Summiergliedes 11' zu verbinden; der Schalter 12'' könnte dann entfallen und die in der dargestellten Schaltposition gezeichnete Verbindung als Verbindungsleitung realisiert sein. Andernfalls wäre auf der Wechselrichterseite ein zusätzlicher Schalter vorzusehen (nicht dargestellt), wie es im Zusammenhang mit der Frequenz $f_o$ weiter oben beschrieben wurde.

Nachstehend soll die Problemstellung und die Funktionsweise der Kompensationseinrichtung in Verbindung mit einer zu kompensierenden Stromschwingung der Netzfrequenz $f_o$ erläutert werden.

Bei einer HGUe-Kurzkupplung können ohne eine spezielle Kompensationseinrichtung Instabilitäten, die durch die zweite Haronische der Netzfrequenz $f_o$ von 50 Hz auftreten, jeweils nach wenigen Sekunden zur Abschaltung der Anlage führen. Durch die harmonischen Filter F und F' werden charakteristische Harmonische $m \cdot p \pm 1$, bei 12 pulsigen Stromrichtern 1 und 2 z.B. die 11. und 13. Harmonische, herausgefiltert, nicht aber die 2. Harmonische. Die dadurch auftretenden Instabilitätsschwingungen umfassen das gesamte System:

—Gleichstromseite der HGUe,
—Wechselstromseiten der HGUe,
—Stromrichtertransformatoren 3 und 3',
—harmonische Filter F und F',
—eventuell vorhandene Blindlastkompensatoren K und K' sowie
—die Drehstromnetze A und B.

Es sei angenommen, dass der Gleichstrom $i_d$ im Gleichstromzwischenkreis der HGUe-Verbindung eine Stromschwingung mit der Frequenz 50 Hz aufweist. Durch die Stromwechselrichterfunktion der Brücken des Zwischenkreis-Wechselrichters 2 wird—auch bei exakt äquidistanten Zündsignalen S9'—wechselstromseitig ein Strom $i_2$ erzeugt, welcher eine zweite Harmonische und einen Gleichstromanteil enthält. Die Brückenschaltung des Zwischenkreis-Wechselrichters 2 hat eine frequenztransformierende Wirkung. Der Gleichstromanteil des Stromes $i_2$ bringt den Stromrichtertransformator 3' in Sättigung, wodurch wiederum Harmonische, darunter auch die zweite Harmonische, auf der Netzseite des Stromrichtertransformators 3' erzeugt werden.

Die Summe der Anteile der zweiten Harmonischen im Wechselstrom wird nun dem Gebilde aus harmonischem Filter F', einen eventuell vorhandenen Blindstromkompensator K' sowie dem Drehstromnetz B aufgeprägt. Weist dieses Gebilde nun bei der zweiten Harmonischen eine hohe Impedanz auf, so entsteht dadurch auch eine zweite Harmonische in der Wechselspannung $U_B$.

Durch die Spannungsgleichrichterfunktion der Brücke des Zwischenkreis-Wechselrichters 2 wird nun die zweite Harmonische in der Wechselspannung $U_B$ auf die Zwischenkreis-Gleichspannung $U_d$ übertragen. Dort erscheint sie nun aber nicht mehr als zweite Harmonische, sondern infolge der frequenztransformierenden Wirkung der Brücke von 2 als Grundschwingung von 50 Hz. Diese 50-Hz-Schwingung auf der Zwischenkreis-Gleichspannung $U_d$ erzeugt nun ihrerseits wieder eine Stromschwingung bzw. einen Stromrippel auf dem Gleichstrom $i_d$ von ebenfalls 50 Hz. Damit ist nun der Instabilitätskreis geschlossen.

Ob es in diesem immer und prinzipiell vorhandenen Wirkungskreis zu einer zunehmenden Instabilität kommt, hängt von den Verstärkungen und von den Phasenverschiebungen in dem beschriebenen Wirkungskreis ab. Gefahren für eine HGUe-Anlage bestehen insbesondere dann, wenn entweder in den harmonischen Filtern F und F' oder in den Blindstromkompensatoren K und K' Kondensatoren mit grosser Kapazität installiert sind, die zusammen mit der Impedanz der Drehstromnetze A, B für die von der Brücke des zweiten Stromrichters 2 her eingespeisten zweiten harmonischen Stromschwingungen einen Sperrkreis bilden.

Die harmonische Instabilität kann prinzipiell auf zwei verschiedenen Wegen bedämpft und damit unwirksam gemacht werden:

—durch entsprechende Dimensionierung der harmonischen Filter F und F' bzw. der Blindstromkompensatoren K und K'. Wenn eine solche Massnahme nachträglich bei einer HGUe-Anlage ergriffen werden muss, ist das teuer, weil sie Leistungskomponenten umfasst.

—durch eine elektronische Steuer- und Regeleinrichtung. Eine solche Massnahme ist, auch wenn sie nachträglich durchgeführt werden muss, vergleichsweise billig, insbesondere dann, wenn speicherprogrammierte Geräte verwende werden.

Die Beschreibung der Funktionsweise der Kompensationseinrichtung erfolgt anhand der gleichrichterseitigen Anordnung für die Frequenz $f_o$. Für die Wechselrichterseite gilt sinngemäss dasselbe.

Mittels des Stromdetektors 5 wird ein dem Gleichstrom $i_d$ proportionales Gleichstromzwischenkreis-Stromsignal S5 erfasst, vgl. Fig. 2, das die Instabilitätsschwingung enthält. In Fig. 2 ist gestrichelt der mittlere Gleichstrom eingezeichnet, der sich ohne diese Instabilitätsschwingung ergeben würde. In dem Bandpassfilter 16 wird der Gleichstromanteil des Gleichstromzwischenkreis-Stromsignals S5 abgetrennt. Das somit erhaltene Bandpassfilter-Ausgangssignal S16, vgl. Fig. 3, wird in dem 90°-Phasendrehglied 15 nacheilend um 90° in seiner Phase verschoben. Das so erhaltene Kompensationssignal S15, vgl. Fig. 4, wird einerseits dem ersten Funktionsbildner 13 für Wechselrichterbetrieb und andererseits auch dem zweiten Funktionsbildner 14 für Gleichrichterbetrieb zugeführt.

Der erste Funktionsbildner 13 liefert das Signal S13, vgl. Fig. 6, mit der positiven Komponente von S15 über die Verbindungsleitung 20 und den Schalter 12' an das Summierglied 11'. Dort wird immer dann, wenn das Gleichstromzwischenkreis-Stromsignal S5 abnimmt, vgl. Fig. 2, eine positive Signalkomponente S13 zu dem "normalen" Zündsteuersignal S17' addiert, im Sinne einer Vergrösserung des Cosinus des Zündwinkels $\alpha 2$ für den Zwischenkreis-Wechselrichter 2. Da der Zwischenkreis-Wechselrichter 2 üblicher-

weise mit einem Zündwinkel $\alpha2$ geringfügig unterhalb 180° betrieben wird, bedeutet eine Vergrösserung von cos $\alpha2$ eine Verkleinerung von $\alpha2$. Damit verringert sich die gleichstromseitige Gleichspannung am Zwischenkreis-Wechselrichter 2, so dass der Gleichstrom $i_d$ am Absinken gehindert wird.

$i_d$ könnte im Prinzip auch durch eine Verringerung von $\alpha1$ konstant gehalten werden; dies ist jedoch dann nicht mehr möglich, wenn $\alpha1$ bereits am "Anschlag", d.h. <15° ist. Von dieser Möglichkeit wird daher kein Gebrauch gemacht.

Der zweite Funktionsbildner 14 liefert das negative Signal S14, vgl. Fig. 5, mit der negativen Komponente von S15 über den Schalter 12 an das Summierglied 11. Dort wird immer dann, wenn das Gleichstromzwischenkreis-Stromsignal S5 zunimmt, vgl. Fig. 2, eine negative Signalkomponente S14 zu dem "normalen" Zündsteuersignal S17 addiert, im Sinne einer Verringerung von cos $\alpha1$ und damit einer Vergrösserung des Zündwinkels $\alpha1$ für den Zwischenkreis-Gleichrichter 1, der üblicherweise mit $\alpha1$ etwas oberhalb 0° betrieben wird. Damit wird die gleichstromseitige Gleichspannung des Zwischenkreis-Gleichrichters 1 verkleinert und so der Anstieg des Gleichstromes $i_d$ verhindert.

$i_d$ könnte im Prinzip auch durch eine Vergrösserung von $\alpha2$ konstant gehalten werden; dies ist jedoch dann nicht mehr möglich, wenn $\alpha2$ bereits am "Anschlag", d.h. nahe der Wechselrichterkippgrenze, insbesondere im Bereich von 130°—150° ist. Von dieser Möglichkeit wird daher kein Gebrauch gemacht.

Mit der erfindungsgemässen Gegentaktmethode kann man jederzeit—also auch dann, wenn sowohl der Zwischenkreis-Gleichrichter 1 als auch der Zwischenkreis-Wechselrichter 2 in ihrem stationären Zustand am Anschlag arbeiten ($\alpha1$ gegen 0°, $\alpha2$ gegen 180°)—vergrössernd oder verkleinernd auf $i_d$ einwirken, und zwar stromverkleinernd mit dem Zündwinkel $\alpha1$ des Zwischenkreis-Gleichrichters 1 und stromerhöhend mit dem Zündwinkel $\alpha2$ des Zwischenkreis-Wechselrichters 2. Damit lässt sich die von der harmonischen Instabilität herrührende Stromschwingung auf 0 ausregeln.

Zusätzlich oder alternativ kann auf die gleiche Weise eine derartige Ausregelung auch für ggf. mehrere Stromschwingungen andere Frequenz $f_x$ erfolgen, wofür dann mehrere Kompensationskreise vorzusehen sind.

Vorzugsweise können die Funktionen der Bauelemente 11—16, 11'—16' und 12"—16" mittels eines Computerprogramms nachgebildet und, zusammen mit dem herkömmlichen Steuerprogramm, in einem programmierbaren Datenspeicher (PROM), implementiert sein.

Selbstverständlich können die Wechselspannungen $U_A$ und $U_B$ sowie die Zwischenkreis-Gleichspannung $U_d$ andere Werte annehmen, als angegeben. Die Netzfrequenz $f_o$ kann statt 50 Hz selbstverständlich aus z.B. 60 Hz betragen. Anstelle der Stromrichter 1 und 2 können zwei Stromrichterstationen mit mehreren in Reihe und/ oder parallelgeschalteten Stromrichterbrücken vorgesehen sein, wobei ggf. Stromrichtertransformatoren 3 und 3' mit z.B. vier Wicklungen oder mehrere, ggf. in der Spannung regelbare Stromrichtertransformatoren zur Anwendung kommen.

Anstelle eines Stromdetektors 5 bzw. 5' im Gleichstromzwischenkreis können auch drei Stromwandler in den Wechselstromzuleitungen zum jeweiligen Stromrichter 1 bzw. 2 vorgesehen sein, von denen ein Gleichstromzwischenkreis-Stromsignal in bekannter Weise abgeleitet wird. Ein die Instabilität bzw. die zu kompensierende Stromschwingung enthaltendes Signal kann statt vom Gleichstrom $i_d$ selbstverständlich auch von der Zwischenkreis-Gleichspannung $U_d$ abgeleitet und eingangsseitig dem Bandpassfilter 16 bzw. 16' bzw. 16" zugeführt werden.

Zusätzlich oder alternativ zum Zündwinkel kann auch auf den Löschwinkel der Stromrichter 1 und 2 eingewirkt werden. So kann z.B. statt des Zündwinkels $\alpha1$—oder zusätzlich—der Löschwinkel des Zwischenkreis-Gleichrichters 1 erhöht werden. Statt einer Verkleinerung des Zündwinkels $\alpha2$—oder zusätzlich—kann der Löschwinkel des Zwischenkreis-Wechselrichters 2 verringert werden.

Das erfindungsgemässe Verfahren sowie die Kompensationseinrichtung sind auch auf Stromrichter mit Gleichspannungszwischenkreis zur Stabilisierung der Gleichspannung anwendbar. Wichtig ist, dass im Gegentaktverfahren auf beide Stromrichter kompensierend eingewirkt wird mit Kompensationssignalen, die um 90° nacheilend phasenverschoben sind. Die Amplitude der Kompensationssignale ist vorzugsweise einstellbar.

**Patentansprüche**

1. Verfahren zur Kompensation von Stromschwingungen in einem Gleichstromzwischenkreis zwischen mindestens einem ersten Stromrichter bzw. Zwischenkreis-Gleichrichter (1) und mindestens einem zweiten Stromrichter bzw. Zwischenkreis-Wechselrichter (2), insbesondere zur Kompensation von Stromschwingungen in einer Hochspannungs-Gleichstrom-Übertragungsanlage, mit folgenden Merkmalen:

a) es wird mindestens ein die Stromschwingungen kennzeichnendes Gleichstromzwischenkreis-Stromsignal (S5, S5') detektiert,

b) in Abhängigkeit von diesem Gleichstromzwischenkreis-Stromsignal wird der Zwischenkreis-Wechselrichter (2) im Sinne einer Kompensation der Stromschwingungen gesteuert,

c) in Abhängigkeit von mindestens einem Gleichstromzwischenkreis-Stromsignal wird zusätzlich auch mindestens ein Zündwinkel ($\alpha1$) des Zwischenkreis-Gleichrichters (1) gesteuert,

d) die Kompensations-Steuerung des Zwischenkreis-Gleichrichters (1) und des Zwischenkreis-Wechselrichters (2) erfolgt im Gegentaktverfahren,

e) mit einer Phasenverschiebung um 90° derart,

f) dass während eines Abnehmens des Gleichstromzwischenkreis-Stromsignals der Zündwin-

kel (α2) des Zwischenkreis-Wechselrichters (2) reduziert wird und

g) dass während eines Anstieges des Gleichstromzwischenkreis-Stromsignals der Zündwinkel (α1) des Zwischenkreis-Gleichrichters (1) erhöht wird.

2. Verfahren nach Anspruch 1, dadurch gekennzeichnet,

a) dass in Abhängigkeit von mindestens einem Gleichstromzwischenkreis-Stromsignal (S5, S5') mindestens eine Frequenzfilterung im Sinne einer Bandpassfilterung (16, 16', 16'') durchgeführt wird, wobei jede Frequenzfilterung auf die Frequenz einer zu kompensierenden Stromschwingung abgestimmt ist,

b) dass in Abhängigkeit mindestens eines Gleichstromzwischenkreis-Stromsignals (S5, S5') eine nacheilende Phasenverschiebung um 90° vorgenommen und damit mindestens ein voreilend phasenverschobenes, gefiltertes Kompensationssignal (S15, S15', S15'') erzeugt wird,

c) dass in Abhängigkeit von der negativen Komponente dieses Kompensationssignals der Zündwinkel (α1) des Zwischenkreis-Gleichrichters (1) im Sinne einer Vergrösserung des Zündwinkels beeinflusst wird und

d) dass in Abhängigkeit von der positiven Komponente (S13) dieses Kompensationssignals der Zündwinkel (α2) des Zwischenkreis-Wechselrichters (2) im Sinne einer Verkleinerung des Zündwinkels beeinflusst wird.

3. Verfahren nach Anspruch 2, dadurch gekennzeichnet,

a) dass für Stromschwingungen unterschiedlicher Frequenz (f$_o$, f$_x$) unterschiedliche, auf die jeweilige Frequenz abgestimmte Kompensationssignale (S15, S15') abgeleitet,

b) bei negativem Vorzeichen des jeweiligen Kompensationssignals zu einem Zündsteuersignal (S17) des Zwischenkreis-Gleichrichters (1) addiert und

c) bei positivem Vorzeichen des jeweiligen Kompensationssignals zu einem Zündsteuersignal (S17') des Zwischenkreis-Wechselrichters (2) addiert werden.

4. Verfahren nach Anspruch 2 oder 3, dadurch gekennzeichnet, dass mindestens ein Kompensationssignal (S15, S15', S15'') auf die Grundschwingung (f$_o$) eines Drehstromnetzes (A, B) abgestimmt ist.

5. Verfahren nach einem der Ansprüche 1 bis 4, dadurch gekennzeichnet,

a) dass die Bildung mindestens eines Kompensationssignals (S15, S15', S15'') sowohl am Ort des ersten Stromrichters (1) als auch am Ort des zweiten Stromrichters (2) erfolgt,

b) insbesondere, dass der erste Stromrichter wahlweise als Zwischenkreis-Gleichrichter (1) oder als Zwischenkreis-Wechselrichter (2) betreibbar ist und

c) dass der zweite Stromrichter wahlweise als Zwischenkreis-Wechselrichter (2) oder als Zwischenkreis-Gleichrichter (1) betreibbar ist.

6. Kompensationseinrichtung zur Kompensation von Stromschwingungen

a) in einem Gleichstromzwischenkreis zwischen mindestens einem ersten Stromrichter bzw. Zwischenkreis-Gleichrichter (1) und mindestens einem zweiten Stromrichter bzw. Zwischenkreis-Wechselrichter (2),

b) insbesondere zur Kompensation von Stromschwingungen in einer Hochspannungs-Gleichstrom-Uebertragungsanlage,

c) mit mindestens einem Stromdetektor (5, 5') zur Erfassung eines Gleichstromes (i$_d$, i$_{d'}$) des Gleichstromzwischenkreises,

d) mit einer Zündwinkelsteuereinrichtung (17, 10, 9) für den Zwischenkreis-Gleichrichter und

e) mit einer Zündwinkelsteuereinrichtung (17', 10', 9') für den Zwischenkreis-Wechselrichter,

f) ferner mit mindestens einem Bandpassfilter (16, 16', 16''), das auf eine Frequenz (f$_o$, f$_x$) einer zu kompensierenden Stromschwingung abgestimmt ist und eingangsseitig mit dem Stromdetektor in Wirkverbindung steht,

g) dass mindestens ein 90°-Phasendrehglied (15, 15', 15'') nacheilend eingangsseitig mit einem Ausgang des Bandpassfilters in Wirkverbindung steht,

h) dass mindestens ein erster Funktionsbildner (13, 13', 13'') für Wechselrichterbetrieb eingangsseitig mit einem Ausgang des 90°-Phasendrehgliedes und ausgangsseitig mit der Zündwinkelsteuereinrichtung (17', 10', 9') des Zwischenkreis-Wechselrichters (2) in Wirkverbindung steht, welcher erste Funktionsbildner nur positive Eingangssignale passieren lässt, und

i) dass mindestens ein zweiter Funktionsbildner (14, 14', 14'') für Wechselrichterbetrieb eingangsseitig mit dem Ausgang des 90°-Phasendrehgliedes und ausgangsseitig mit der Zündwinkelsteuereinrichtung (17, 10, 9) des Zwischenkreis-Gleichrichters (1) in Wirkverbindung steht, welcher zweite Funktionsbildner nur negative Eingangssignale passieren lässt.

7. Kompensationseinrichtung nach Anspruch 6, dadurch gekennzeichnet,

a) dass der Ausgang mindestens eines ersten Funktionsbildners (13, 13', 13'') mit einem "+"-Signaleingang eines wechselrichterseitigen Addiergliedes (11') in Wirkverbindung steht,

b) dass der Ausgang des Addiergliedes über einen wechselrichterseitigen Funktionsgeber für arccos (10') und

c) über einen diesem nachgeordneten wechselrichterseitigen Zündimpulsbildner (9') mit einem Zündsignaleingang des Zwischenkreis-Wechselrichters (2) in Wirkverbindung steht,

d) dass der Ausgang mindestens eines zweiten Funktionsbildners (14, 14', 14'') mit einem "+"-Signaleingang eines gleichrichterseitigen Addiergliedes (11) in Wirkverbindung steht,

e) dass der Ausgang dieses Addiergliedes über einen gleichrichterseitigen Funktionsgeber für arccos (10) und

f) über einen diesem nachgeordneten gleichrichterseitigen Zündimpulsbildner (9) mit einem Zündimpulseingang des Zwischenkreis-Gleichrichters (1) in Wirkverbindung steht.

8. Kompensationseinrichtung nach Anspruch 6 oder 7, dadurch gekennzeichnet,

a) dass sowohl am Ort des ersten Stromrichters (1) als auch am Ort des zweiten Stromrichters (2)

b) mindestens ein Stromdetektor (5, 5') und

c) mindestens ein Bandpassfilter (16, 16', 16'') mit jeweils nachgeordnetem 90°-Phasendrehglied nacheilend (15, 15', 15'') vorgesehen sind,

d) wobei jedem 90°-Phasendrehglied ausgangsseitig ein erster Funktionsbildner für Wechselrichterbetrieb (13, 13', 13'') und ein zweiter Funktionsbildner für Gleichrichterbetrieb (14, 14', 14'') nachgeordnet sind, und

e) dass der Ausgang des ersten und zweiten Funktionsbildners umschaltbar über einen Schalter (12, 12', 12'') mit einem "+"-Signaleingang des Summiergliedes (11, 11') des Stromrichters (1, 2) am jeweiligen Ort in Wirkverbindung steht.

**Revendications**

1. Procédé de compensation d'oscillations de courant dans un circuit intermédiaire à courant continu entre au moins un premier convertisseur ou redresseur indirect (1) et au moins un second convertisseur ou onduleur indirect (2), en particulier pour la compensation d'oscillations de courant dans une installation de transport de courant continu à haute tension, avec les particularités suivantes:

a) au moins un signal de courant de circuit intermédiaire à courant continu (S5, S5') caractérisant les oscillations de courant est détecté;

b) l'onduleur indirect (2) est commandé dans le sens d'une compensation des oscillations de courant en fonction de ce signal de courant de circuit intermédiaire à courant continu;

c) au moins un angle d'allumage (α1) du redresseur indirect (1) est, en outre, commandé en fonction d'au moins un signal de courant de circuit intermédiaire à courant continu;

d) la commande de compensation du redresseur indirect (1) et de l'onduleur indirect (2) s'effectue en un mode push-pull;

e) avec un déphasage de 90°, de telle sorte que:

f) pendant une décroissance du signal de courant de circuit intermédiaire à courant continu, l'angle d'allumage (α2) de l'onduleur indirect (2) soit diminué, et

g) pendant une croissance du signal de courant de circuit intermédiaire à courant continu, l'angle d'allumage (α1) du redresseur indirect (1) soit augmenté.

2. Procédé suivant la revendication 1, caractérisé en ce que:

a) au moins un filtrage de fréquence dans le sens d'un filtrage passe-bande (16, 16', 16'') est effectué en fonction d'au moins un signal de courant de circuit intermédiaire à courant continu (S5, S5'), chaque filtrage de fréquence étant accordé sur la fréquence d'une oscillation de courant à compenser;

b) un déphasage en arrière de 90° est effectué et ainsi au moins un signal de compensation filtré, déphasé en avant (S15, S15', S15'') est produit en fonction d'au moins un signal de courant de circuit intermédiaire à courant continu (S5, S5');

c) l'angle d'allumage (α1) du redresseur indirect (1) est influencé dans le sens d'une augmentation en fonction de la composante négative de ce signal de compensation, et

d) l'angle d'allumage (α2) de l'onduleur indirect (2) est influencé dans le sens d'une diminution en fonction de la composante positive (S13) de ce signal de compensation.

3. Procédé suivant la revendication 2, caractérisé en ce que:

a) pour des oscillations de courant de fréquences différentes ($f_o$, $f_x$), des signaux de compensation différents (S15, S15') accordés sur la fréquence en question sont dérivés;

b) sont ajoutés, dans le cas d'un signe négatif du signal de compensation en question à un signal de commande d'allumage (S17) du redresseur indirect (1), et

c) sont ajoutés, dans le cas d'un signe positif du signal de compensation en question, à un signal de commande d'allumage (S17') de l'onduleur indirect (2).

4. Procédé suivant la revendication 2 ou 3, caractérisé en ce qu'au moins un signal de compensation (S15, S15', S15'') est accordé sur l'oscillation fondamentale ($f_o$) d'un réseau à courant triphasé (A, B).

5. Procédé suivant l'une quelconque des revendications 1 à 4, caractérisé en ce que:

a) la formation d'au moins un signal de compensation (S15, S15', S15'') s'effectue aussi bien au niveau du premier convertisseur (1) qu'à celui du second convertisseur (2);

b) en particulier, le premier convertisseur peut être mis en oeuvre au choix comme redresseur indirect (1) ou comme onduleur indirect (2), et

c) le second convertisseur peut être mis en oeuvre comme onduleur indirect (2) ou comme redresseur indirect (1).

6. Dispositif de compensation destiné à compenser des oscillations de courant:

a) dans un circuit intermédiaire à courant continu entre au moins un premier convertisseur ou redresseur indirect (1) et au moins un second convertisseur on onduleur indirect (2);

b) en particulier pour la compensation d'oscillations de courant dans une installation de courant continu à haute tension;

c) comportant au moins un détecteur de courant (5, 5') pour la détection d'un courant continu ($i_d$, $i_{d'}$) du circuit intermédiaire à courant continu;

d) un dispositif de commande d'angle d'allumage (17, 10, 9) pour le redresseur indirect, et

e) un dispositif de commande d'angle d'allumage (17', 10', 9') pour l'onduleur indirect;

f) ainsi qu'au moins un filtre passe-bande (16, 16', 16'') qui est accordé sur une fréquence ($f_o$, $f_x$) d'une oscillation de courant à compenser et est connecté activement du côté d'entrée au détecteur de courant;

caractérisé en ce que:

g) au moins un élément de rotation de phase de 90° (15, 15', 15'') est en liaison active avec retard du côté d'entrée avec une sortie du filtre passebande.

h) au moins un premier générateur de fonction (13, 13', 13'') pour le mode onduleur est en liaison active du côté d'entrée avec une sortie de l'élément de rotation de phase de 90° et du côté de sortie avec le dispositif de commande d'angle d'allumage (17', 10', 9') de l'onduleur indirect (2), ce premier générateur de fonction ne laissant passer que des signaux d'entrée positifs, et

i) qu'au moins un second générateur de fonction (14, 14', 14'') pour le mode onduleur est en liaison active du côté d'entrée avec la sortie de l'élément de rotation de phase de 90° et du côté de sortie avec le dispositif de commande d'angle d'allumage (17, 10, 9) du redresseur indirect (1), ce second générateur de fonction ne laissant passer que des signaux d'entrée négatifs.

7. Dispositif de compensation suivant la revendication 6, caractérisé en ce que:

a) la sortie d'au moins un premier générateur de fonction (13, 13', 13'') est en liaison active avec une entrée de signal "+" d'un élément additionneur (11') situé du côté de l'onduleur;

b) la sortie de l'élément additionneur est en liaison active, par l'intermédiaire d'un générateur de fonction pour arccos (10') situé du côté de l'onduleur, et

c) par l'intermédiaire d'un générateur d'impulsions d'allumage (9') situé du côté de l'onduleur en aval de l'élément additionneur, avec une entrée de signal d'allumage de l'onduleur indirect (2);

d) la sortie d'au moins un second générateur de fonction (14, 14', 14'') est en liaison active avec une entrée de signal "+" d'un élément additionneur (11) situé du côté du redresseur;

e) la sortie de cet élément additionneur est en liaison active, par l'intermédiaire d'un générateur de fonction pour arccos (10) situé du côté du redresseur, et

f) par l'intermédiaire d'un générateur d'impulsions d'allumage (9) situé du côté du redresseur, en aval de l'élément additionneur, avec une entrée d'impulsions d'allumage du redresseur indirect (1).

8. Dispositif de compensation suivant la revendication 6 ou 7, caractérisé en ce:

a) au'aussi bien au niveau du premier convertisseur (1) qu'à celui du second convertisseur (2),

b) au moins un détecteur de courant (5, 5'), et

c) au moins un filtre passe-bande (16, 16', 16'') avec chaque fois un élément de rotation de phase de 90° situé en aval et déphasé en arrière (15, 15', 15'') sont prévus;

d) chaque élément de rotation de phase de 90° étant suivi à sa sortie par un premier générateur de fonction pour le mode onduleur (13, 13', 13'') et d'un second générateur de fonction pour le mode redresseur (14, 14', 14''), et

e) la sortie du premier et du second générateur de fonction est en liaison active de manière commutable par l'intermédiaire d'un commutateur (12, 12', 12'') avec une entrée de signal "+" de l'élément sommateur (11, 11') du convertisseur (1, 2) à l'endroit en question.

## Claims

1. Method for compensating current oscillations in a direct-current link circuit between at least one first static converter or link-circuit rectifier (1) and at least one second static converter or link-circuit inverter (2), particularly for compensating current oscillations in a high-voltage direct-current transmission system, comprising the following features:

a) at least one direct-current link-circuit current signal (S5, S5'), which characterises the current oscillations, is detected,

b) the link-circuit inverter C2, is controlled in dependence on this direct-current link-circuit current signal, with the aim of compensating the current oscillations,

c) additionally also at least one firing angle (α1) of the link-circuit rectifier (1) is controlled in dependence on at least one direct-current link-circuit current signal,

d) the compensation control process of the link-circuit rectifier (1) and of the link-circuit inverter (2) is effected by the push-pull method,

e) having a 90° phase shift, in such a manner that

f) the firing angle (α2) of the link-circuit inverter (2) is reduced when the direct-current link-circuit current signal decreases, and that

g) the firing angle (α1) of the link-circuit rectifier (1) is increased when the direct-current link-circuit current signal is rising.

2. Method according to Claim 1, characterised in that

a) at least one frequency filtering operation, implemented as band-pass filtering (16, 16', 16''), is effected in dependence on at least one direct-current link-circuit current signal (S5, S5'), each frequency filtering process being tuned to the frequency of a current oscillation to be compensated,

b) that a trailing 90° phase shift is effected in dependence on at least one direct-current link-circuit current signal (S5, S5') and by this means at least one leading phase-shifted, filtered compensation signal (S15, S15', S15'') is generated,

c) that the firing angle (α1) of the link-circuit rectifier (1) is influenced in dependence on the negative component of this compensation signal with the aim of increasing the firing angle, and

d) that the firing angle (α2) of the link-circuit invertor (2) is influenced in dependence on the positive component (S13) of this compensation signal with the aim of reducing the firing angle.

3. Method according to Claim 2, characterised in that

a) compensation signals (S15, S15') are derived which are different for current oscillations of different frequency ($f_o$, $f_x$) and which are tuned to the respective frequency,

b) are added to a firing control signal (S17) of the link-circuit rectifier (1) if the respective compensation signal has a negative sign, and

c) are added to a firing control signal (S17') of the link-circuit inverter (2) if the respective compensation signal has a positive sign.

4. Method according to Claim 2 or 3, characterised in that at least one compensation signal (S15, S15', S15'') is tuned to the fundamental oscillation ($f_o$) of a three-phase system (A, B).

5. Method according to one of Claims 1 to 4, characterised in that

a) at least one compensation signal (S15, S15', S15'') is formed both at the location of the first static converter (1) and at the location of the second static converter (2),

b) in particular, that the first static converter can be optionally operated as link-circuit rectifier (1) or as link-circuit inverter (2), and

c) that the second static converter can be optionally operated as link-circuit inverter (2) or as link-circuit rectifier (1).

6. Compensating device for compensating current oscillations

a) in a direct-current link circuit between at least one first static converter or link-circuit rectifier (1) and at least one second static converter or link-circuit inverter (2),

b) in particular, for compensating current oscillations in a high-voltage direct-current transmission system

c) comprising at least one current detector (5, 5') for detecting a direct-current ($i_d$, $i_{d'}$) of the direct-current link circuit,

d) comprising a firing angle control device (17, 10, 9) for the link-circuit rectifier and

e) comprising a firing angle control device (17', 10', 9') for the link-circuit inverter,

f) and also comprising at least one band-pass filter (16, 16', 16'') which is tuned to a frequency ($f_o$, $f_x$) of a current oscillation to be compensated and the input of which is effectively connected to the current detector,

g) that the input of at least one 90° phase-shifting section (15, 15', 15'') is effectively connected with trailing action to an output of the band-pass filter,

h) that, for inverter operation, at least one first function generator (13, 13', 13'') is effectively connected at its input to an output of the 90° phase-shifting section and at its output to the firing angle control device (17', 10', 9') of the link-circuit inverter (2), which first function generator only allows positive input signals to pass, and, i) that, for inverter operation, at least one second function generator (14, 14', 14'') is effectively connected at its input to the output of the 90° phase-shifting section and at its output to the firing-angle control device (17, 10, 9) of the link-circuit rectifier (1), which second function generator only allows negative input signals to pass.

7. Compensating device according to Claim 6, characterised in that

a) the output of at least one first function generator (13, 13', 13'') is effectively connected to a positive signal input of an adding section (11') at the inverter,

b) that the output of the adding section is effectively connected via a function generator for arccos (10') at the inverter and

c) via a firing pulse generator (9'), following the function generator for arccos, at the inverter to a firing signal input of the link-circuit inverter (2),

d) that the output of at least one second function generator (14, 14', 14'') is effectively connected to a positive signal input of an adding section (11) at the rectifier,

e) that the output of this adding section is effectively connected via a function generator for arccos (10) at the rectifier and

f) via a firing pulse generator (9), which follows the function generator for arccos, at the rectifier to a firing pulse input of the link-circuit rectifier (1).

8. Compensating device according to Claim 6 or 7, characterised in that,

a) both at the location of the first static converter (1) and at the location of the second static converter (2),

b) at least one current detector (5, 5') and

c) at least band-pass filter (16, 16', 16''), in each case followed by a 90° phase-shifting section with trailing action (15, 15', 15''), are provided,

d) in which arrangement, the output of each 90° phase-shifting section is followed by a first function generator for inverter operation (13, 13', 13'') and a second function generator for rectifier operation (14, 14', 14''), and

e) that the output of the first and second function generators is effectively connected, in a manner so as to be switchable via a switch (12, 12', 12''), to a positive signal input of the summing section (11, 11') of the static converter (1, 2) at the respective location.

FIG. 1

$U_A = 400 kV \sim$

$U_d = 50 kV =$

$U_B = 220 kV \sim$

EP 0 212 172 B1

FIG. 2

FIG. 3

FIG. 4

FIG. 5

FIG. 6